# EUROPEAN PATENT SPECIFICATION

(11) **EP 4 199 208 B1**
(45) Date of publication and mention of the grant of the patent: **16.04.2025**
(21) Application number: 21894917.0
(22) Date of filing: 22.10.2021
(51) Int. Cl.: H01M 50/20, H01M 50/204, H01M 50/209, H01M 50/211, H01M 50/224, H01M 50/262, H01M 50/264, H01M 50/271, H01M 50/244

(54) **BATTERY PACK**
BATTERIEPACK
BLOC-BATTERIE

(30) Priority: 17.11.2020 KR 20200153468
(43) Date of publication of application: 21.06.2023
(73) Proprietor: LG Energy Solution, Ltd., Seoul 07335 (KR)
(72) Inventor: KIM, Tae Geun, Daejeon 34122 (KR); YOON, Young Il, Daejeon 34122 (KR); LEE, Taekyeong, Daejeon 34122 (KR)
(74) Representative: Plasseraud IP
(86) International application number: PCT/KR2021/014961
(87) International publication number: WO 2022/108145

(56) References cited:
- EP-A1- 2 381 506
- WO-A1-2020/110447
- CN-U- 208 923 207
- JP-A- 2019 212 395
- KR-A- 20180 073 972
- KR-A- 20180 113 906
- US-A1- 2017 214 013
- US-A1- 2020 274 120

## Description

### [TECHNICAL FIELD]

### Cross Citation with Related Application

This application claims the benefit of Korean Patent Application No. 10-2020-0153468 filed on November 17, 2020 with the Korean Intellectual Property Office.

The present disclosure relates to a battery pack including at least one battery module, and more particularly to a battery pack with at least one battery module having improved space utilization.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, a lithium secondary battery, and the like. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate each coated with the cathode active material and the anode active material are disposed with a separator being interposed between them, and a battery case that seals and houses the electrode assembly together with an electrolyte solution.

Generally, the lithium secondary battery may be classified based on the shape of the exterior material into a can type secondary battery in which the electrode assembly is built in a metal can, and a pouch type secondary battery in which the electrode assembly is built in a pouch made of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or in parallel to form a cell stack, thereby improving capacity and output. In addition, one or more battery modules may be mounted together with various control and protection systems such as BMS (battery management system) and a cooling system to form a battery pack.

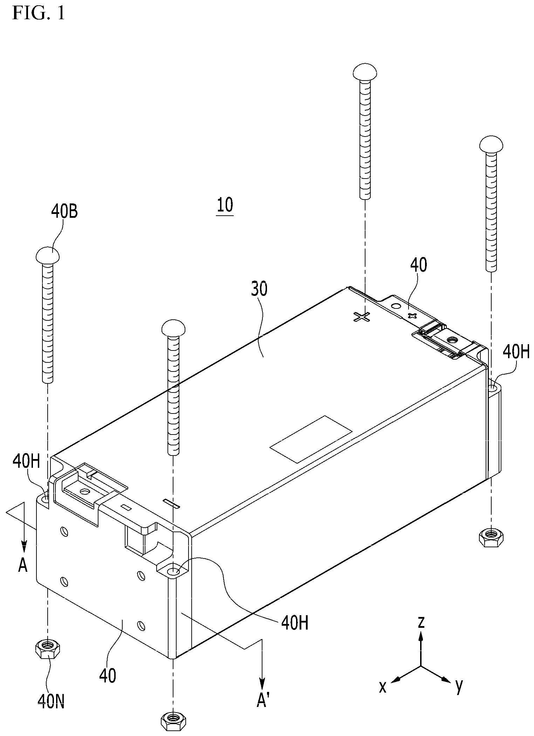

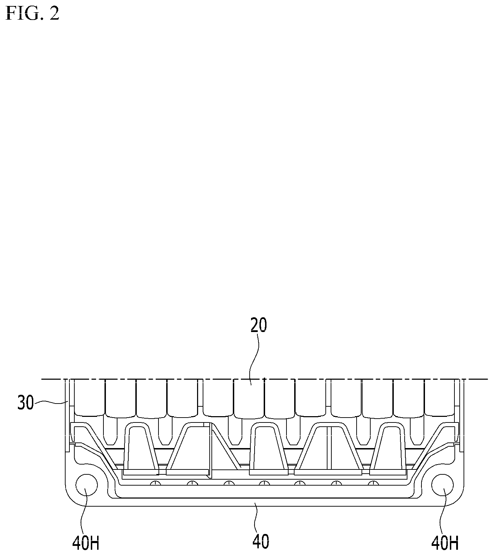

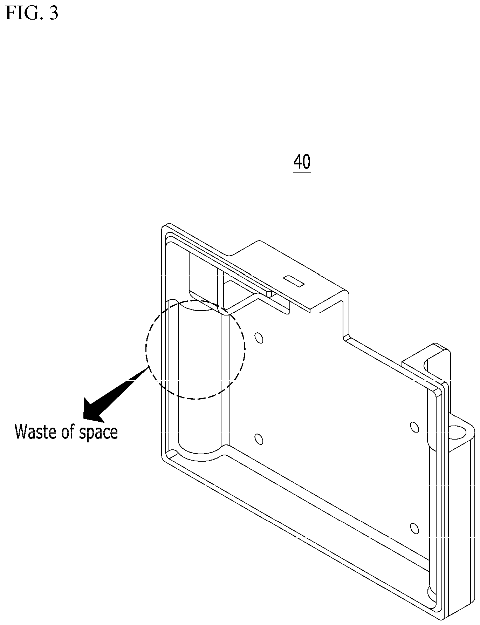

Fig. 1 is a perspective view showing a conventional battery module, Fig. 2 is a cross-sectional view taken along the cutting line A-A' of Fig. 1, and Fig. 3 is a perspective view showing an end plate included in the battery module of Fig. 1. Particularly, Fig. 3 shows the surface of the end plate facing the battery cell.

Referring to Figs. 1 to 3, a conventional battery module 10 can be manufactured by housing a plurality of battery cells 20 in a module frame 30, and then joining an end plate 40 to the module frame 30. When the battery modules 10 are gathered by a plurality of numbers to form a battery pack, or when the battery modules are mounted on a vehicle or the like, each battery module 10 can be fixed to a structure such as a pack frame (not shown). At this time, the conventional battery module 10 may be fixed by forming a mounting structure at four corners. Specifically, mounting holes 40H into which bolts 40B can be inserted can be formed at both ends of the end plate 40 of the battery module 10. The bolt 40B is inserted in the downward direction into the mounting hole 40H, and the nut 40N is coupled to the end of the bolt 40B, so that the battery module 10 can be fixed to the pack frame or the like.

However, in the case of the conventional battery module 10, since the bolt 40B has a form of being inserted downward, the mounting hole 40H has a form that extends along a height direction (a direction parallel to the z-axis) as shown in the figure. Therefore, referring to Figs. 2 and 3, waste of the space occurs as much as the space in which the mounting hole 40H is formed between the end plate 40 and the battery cells 20. That is, in order to fix the battery module 10, mounting holes 40H that extend along the height direction were formed at both ends of the end plate 40, but this caused the deterioration of the space utilization of the battery module 10.

Increasing the space utilization of the battery module is directly linked to the performance of the battery pack, such as increasing the energy density of the battery module and the battery pack including the same, or enabling downsizing of the battery pack, there is a need to improve the space utilization of the battery module.

Further prior art is described in WO 2020/110447 A1, US 2017/214013 A1, and EP 2 381 506 A1.

### [DETAILED DESCRIPTION OF THE INVENTION]

### [Technical Problem]

It is an object of the present disclosure to provide a battery pack with at least one battery module capable of providing additional space inside while forming a mounting structure.

However, the problem to be solved by embodiments of the present disclosure is not limited to the above-described problems, and can be variously expanded within the scope of the technical idea included in the present disclosure.

### [Technical Solution]

This object is accomplished with a battery pack comprising the features of patent claim 1.

Dependent claims are directed on features of preferred embodiments of the present disclosure.

### [Advantageous Effects]

According to embodiments of the present disclosure, a mounting hole is provided at the lower side of the battery module, and the height of the mounting part is adjusted, thereby capable of forming a mounting structure and at the same time, providing an additional space therein and increasing space utilization.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a conventional battery module;
Fig. 2 is a cross-sectional view taken along the cutting line A-A' of Fig. 1;
Fig. 3 is a perspective view showing an end plate included in the battery module of Fig. 1;
Fig. 4 is a perspective view showing a battery module used in a battery pack according to an embodiment of the present disclosure;
Fig. 5 is an exploded perspective view of the battery module of Fig. 4;
Fig. 6 is a perspective view of a battery cell included in the battery module of Fig. 5;
Fig. 7 is a partial perspective view showing a state in which the lower surface of the battery module of Fig. 4 is inverted so as to face upward.
Fig. 8 is a perspective view of an end plate included in the battery module of Fig. 5;
Fig. 9 is a partial perspective view of a battery module and a pack frame according to an embodiment of the present disclosure;
Fig. 10 is a schematic diagram showing a state in which a battery module is mounted on a pack frame according to an embodiment of the present disclosure; and
Fig. 11 is a schematic diagram showing a state in which a battery module according to a modified embodiment of the present disclosure is mounted on a pack frame.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

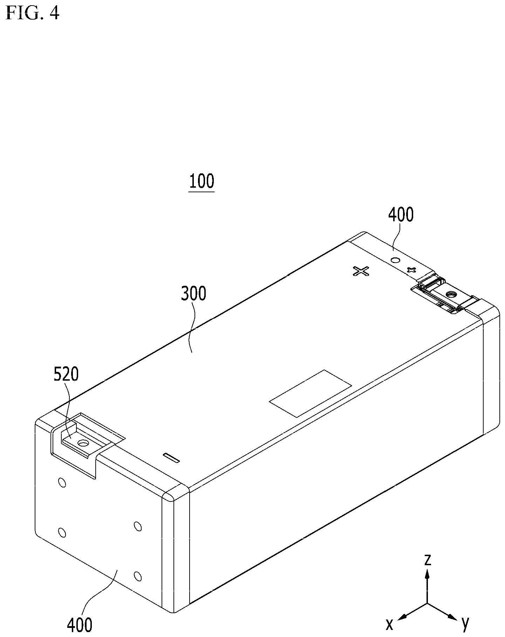

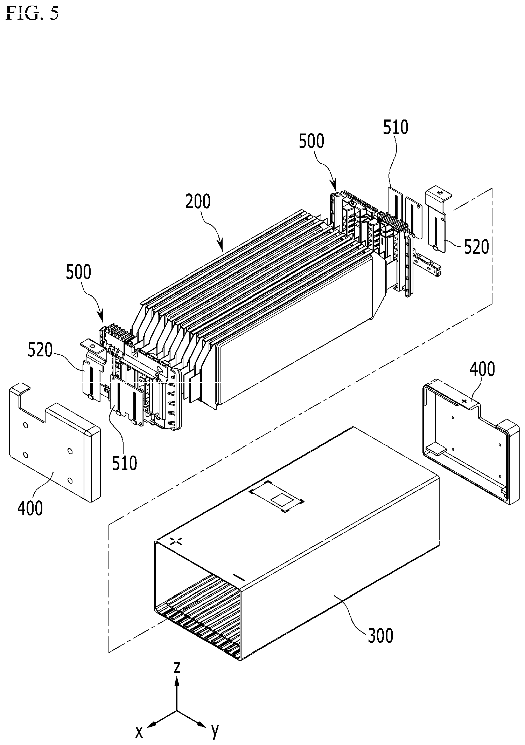

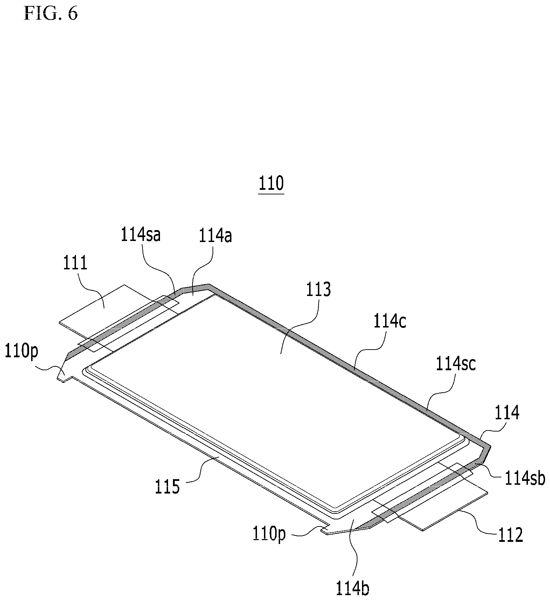

Fig. 4 is a perspective view showing a battery module used in a battery pack according to an embodiment of the present disclosure. Fig. 5 is an exploded perspective view of the battery module of Fig. 4. Fig. 6 is a perspective view of a battery cell included in the battery module of Fig. 5.

Referring to Figs. 4 to 6, a battery module 100 according to one embodiment of the present disclosure includes a battery cell stack 200 in which a plurality of battery cells 110 are stacked, a module frame 300 that houses the battery cell stack 200 is open on two opposing surfaces, and end plates 400 cover the open surfaces of the module frame 300.

First, the battery cell 110 is preferably a pouch-type battery cell, and may be formed in a rectangular sheet-like structure. For example, the battery cell 110 according to the present embodiment has a structure in which the two electrode leads 111 and 112 face each other and protrude from one end and the other end, respectively.

Particularly, referring to Fig.6, the battery cell 110 according to the present embodiment has a structure in which the two electrode leads 111 and 112 face each other and protrude from one end 114a and the other end 114b, respectively. More specifically, the electrode leads 111 and 112 are connected to an electrode assembly (not shown) and are protruded from the electrode assembly (not shown) to the outside of the battery cell 110.

Meanwhile, the battery cell 110 can be manufactured by joining both ends 114a and 114b of a cell case 114 and one side portion 114c connecting them in a state in which an electrode assembly (not shown) is housed in a cell case 114. In other words, the battery cells 110 according to the present embodiment have a total of three sealing portions 114sa, 114sb and 114sc, the sealing portions 114sa, 114sb and 114sc have a structure that is sealed by a method such as heat-sealing, and the remaining other one side portion can be composed of a connection part 115. The cell case 114 can be composed of a laminated sheet including a resin layer and a metal layer.

Further, the connection portion 115 may extend long along one edge of the battery cell 110, and a protrusion portion 110p of the battery cell 110 called a bat-ear may be formed at an end portion of the connection part 115. However, the protrusion portion 110p is an exemplary structure, and the battery cell 110 according to another embodiment of the present disclosure may have a form in which a protrusion portion is not formed and the connection portion 115 extends in a straight line.

A plurality of battery cells 110 are stacked so as to be electrically connected to each other, thereby forming a battery cell stack 200. Particularly, as shown in Fig. 5, the plurality of battery cells 110 can be stacked along the y-axis direction. Thereby, one electrode lead 111 of the battery cells 110 may be protruded toward the x-axis direction, and the other electrode lead 112 may protrude toward the -x-axis direction.

The module frame 300 is open at one surface and at another surface facing the one surface. More specifically, the module frame 300 is opened in both directions in which the electrode leads 111 and 112 protrude with respect to the battery cell stack 200. The end plates 400 cover the open surfaces of the module frame 300, respectively. The battery cell stack 200 is housed in the module frame 300 and the end plates 400 being thereby capable of physically protecting the battery cell stack 200. For this purpose, the module frame 300 and the end plates 400 may include a metal material having a predetermined strength. Meanwhile, the module frame 300 and the end plates 400 may be joined by a method such as welding in a state in which corresponding corner portions are in contact with each other.

Meanwhile, the battery module 100 according to the present embodiment further includes a busbar frame 500 on which a busbar 510 and a terminal busbar 520 are mounted.

The busbar 510 and the terminal busbar 520 can be joined to the electrode leads 111 and 112 of the battery cells 110 in order to electrically connect the plurality of battery cells 110. Specifically, the busbar frame 500 on which the busbar 510 and the terminal busbar 520 are mounted can be disposed on the one surface (x-axis direction) and the other surface (-x-axis direction) of the battery cell stack 200. The one surface (x-axis direction) and the other surface (-x-axis direction) of the battery cell stack 200 correspond to the surfaces in the direction in which the electrode leads 111 and 112 of the battery cells 110 protrude. In other words, the busbar frame 500 are located between the battery cell stack 200 and the end plates 400.

A lead slit may be formed at the busbar frame 500, and the electrode leads 111 and 112 can be bent after passing through the lead slit, and joined to the busbar 510 or the terminal busbar 520. As long as physical and electrical connection is possible, the joining method is not particularly limited, and weld-joining can be performed as an example.

Meanwhile, a slit may be formed in the busbar 510 or the terminal busbar 520, and the slit may be located so as to correspond to the lead slit of the busbar frame 500. The electrode leads 111 and 112 that have passed through the lead slit may be bent by passing through the slit of the busbar 510 or the slit of the terminal bus bar 520.

Meanwhile, a part of the terminal busbar 520 may be exposed to the outside of the battery module 100. Specifically, an opening is formed in the end plate 400 or an insulating cover (not shown), and a part of the terminal busbar 520 may be exposed as shown in Fig. 4. A part of the exposed terminal busbar 520 can be connected to another battery module or a BDU (battery disconnect unit) or the like to realize a high voltage (HV) connection. Here, the HV connection is a connection that plays a role of a power source for supplying electric power, and refers to a connection between battery cells or a connection between battery modules.

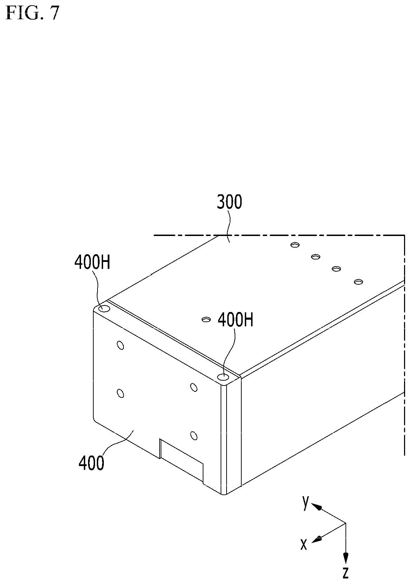

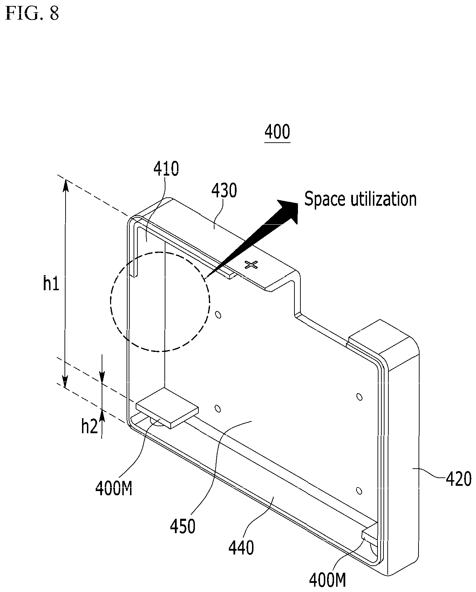

Next, an end plate, a mounting portion, and a mounting hole according to an embodiment of the present disclosure will be described in detail with reference to Figs. 7 and 8.

Fig. 7 is a partial perspective view showing a state in which the lower surface of the battery module of Fig. 4 is inverted so as to face upward. Fig. 8 is a perspective view of an end plate included in the battery module of Fig. 5. Particularly, Fig. 8 shows a surface of the end plate facing the battery cell stack.

Referring to Figs. 5, 7 and 8, the end plate 400 according to the present embodiment includes a mounting portion 400M in which a mounting hole 400H is formed. The mounting hole 400H is opened at the lower surface of the end plate 400, and a thread is formed on the inner surface of the mounting hole 400H.

More specifically, the end plate 400 according to the present embodiment includes a body portion 450, first and second side portions 410 and 420, an upper side portion 430, and a lower side portion 440. The body portion 450 is a portion facing the battery cell stack 200, and the first and second side portions 410 and 420, the upper side portion 430, and the lower side portion 440 are portions that are extended in a direction perpendicular to one surface of the body portion 450 from both sides, an upper side, and a lower side of the body portion 450. That is, the end plate 400 according to the present embodiment has a cover shape that is opened in one surface facing the battery cell stack 200.

At this time, the mounting hole 400H according to the present embodiment is opened on the lower surface of the lower portion 440 of the end plate 400, and the mounting portion 400M may extend along a direction parallel to one surface of the body portion 450. Thereby, in the mounting structure for fixing the battery module 100 to the pack frame, etc., the bolt inserted into the mounting hole 400H is coupled upwardly to the mounting hole 400H.

Meanwhile, referring to Fig. 8, the height h2 of the mounting portion 400M in which the mounting hole is formed may be 0.5 times or less the height h1 of the end plate 400. In another example, the height h2 of the mounting portion 400M may be 0.3 times or less, more preferably 0.2 times or less the height h1 of the end plate 400. That is, since the mounting hole 400H according to the present embodiment is opened on the lower surface of the lower portion 440 of the end plate 400, the height of the mounting part 400M does not need to be formed in the same manner as the height of the end plate 400, unlike the conventional end plate 40 shown in Fig. 3. Even if the height h2 of the mounting portion 400M is formed to be low by 0.5 times or less the height h1 of the end plate 400, the battery module 100 can be sufficiently fixed. Therefore, an empty space can be provided in the upper portion of the mounting portion 400M between the end plate 400 and the battery cell stack 200. The lower limit of the height is not particularly limited, but the height h2 of the mounting portion 400M may be 0.05 times or more the height h1 of the end plate 400 in order to have the minimum degree of fastening. The conventional battery module 10 has a mounting hole 40H structure that is long in the height direction, and needs to secure a space for mounting and fastening, whereas the battery module 100 according to the present embodiment can implement a mounting hole 400H structure that is short in the height direction, and thus can secure an additional space within the battery module 100. It is possible to utilize the space, such as configuring the conventional wasted space to increase the battery capacity. Because of this advantage in terms of space utilization, the battery module and the battery pack including the same according to the present embodiment can have advantages in terms of energy density or downsizing.

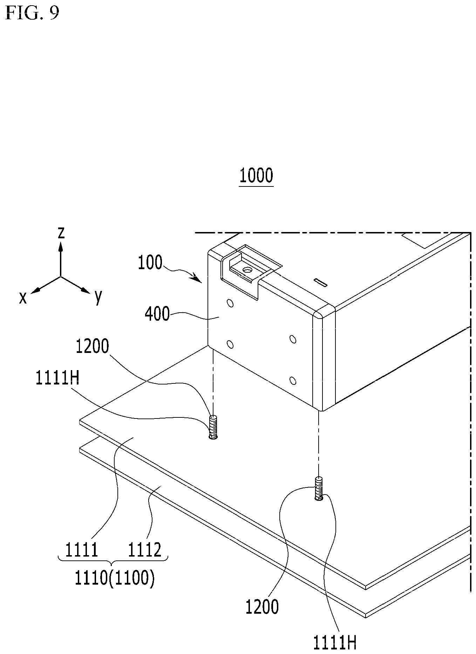

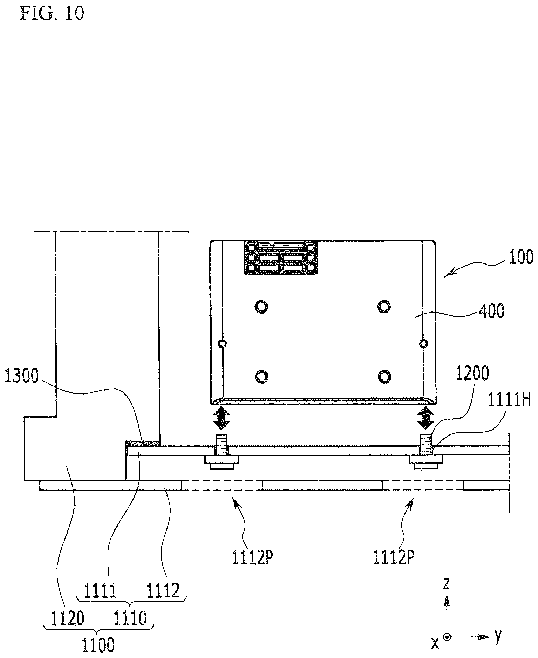

Next, a battery pack according to an embodiment of the present disclosure will be described in detail with reference to Figs. 9 and 10.

Fig. 9 is a partial perspective view of a battery module and a pack frame according to an embodiment of the present disclosure. Fig. 10 is a schematic diagram showing a state in which a battery module according to an embodiment of the present disclosure is mounted on a pack frame.

Referring to Figs, 7, 9 and 10, the battery pack 1000 according to an embodiment of the present disclosure includes a battery module 100, a pack frame 1100 that houses the battery module 100, and a bolt 1200 that passes through the through hole 1111H formed in the bottom portion 1110 of the pack frame 1100 to be coupled to the mounting hole 400H.

The battery modules 100 may be gathered by a plurality of numbers to form a battery pack 1000, wherein each battery module 100 may be fixed to a structure such as the pack frame 1100. At this time, a through hole 1111H is formed in the bottom portion 1110 of the pack frame 1100, and the bolt 1200 passes upwardly through the through hole 1111H, and then can be fastened to the mounting hole 400H of the battery module 100.

More specifically, the bottom portion 1110 of the pack frame 1100 according to the present embodiment may include a mounting plate 1111 for supporting the battery module 100, and a lower plate 1112 located under mounting plate 1111.

By forming the above-mentioned through hole 1111H in the mounting plate 1111, it is possible to support the battery module 100 and at the same time, fix the battery module 100 to the mounting plate 1111, thereby forming a mounting structure. That is, the mounting hole 400H of the battery module 100 and the bolt 1200 may be coupled with the mounting plate 1111 being interposed therebetween.

Meanwhile, the lower plate 1112 is located under the mounting plate 1111, and although not specifically shown in the figure, an equipment such as a cooling water supply pipe for supplying cooling the battery module 100 may be provided between the mounting plate 1111 and the lower plate 1112.

Meanwhile, referring to Fig. 10, in the lower plate 1112 according to the present embodiment, an opening 1112P may be formed in a portion corresponding to the through hole 1111H formed in the mounting plate 1111. That is, an opening 1112P may be formed in each of the portions corresponding to the through hole 1111H with reference to the Z-axis direction. As described above, the bolt 1200 according to the present embodiment is coupled upwardly to the mounting hole 400H of the battery module 100, but a space is needed for mounting the equipment for assembling the bolt 1200. Therefore, by forming the opening 1112P in the lower plate 1112, a space for assembling the bolt 1200 is provided.

Meanwhile, the pack frame 1100 further includes a side surface portion 1120 located on side surface of the battery module 100 and bottom portion 1110. The side surface portion 1120 can form a stepped structure and come into contact with each of the mounting plate 1111 and the lower plate 1112. At this time, a sealing member 1300 having adhesive properties may be located between the side surface portion 1120 and the mounting plate 1111. That is, the side surface portion 1120 and the mounting plate 1111 are adhered and fixed, and at the same time, a gap therebetween can be sealed by the sealing member 1300. As the sealing member 1300 according to the present embodiment is located between the side surface portion 1120 and the mounting plate 1111, the space between the side surface portion 1120 and the mounting plate 1111 is sealed even if the opening 1112P is formed, whereby it is possible to prevent water or the like from flowing into the pack frame 1100.

Meanwhile, if the side surface portion 1120 and the mounting plate 1111 have adhesive properties so that they can be adhered, fixed, and sealed, the material of the sealing member 1300 is not particularly limited. As described above, a space for assembling the bolt 1200 must be secured, such as an opening 1112P being formed in the lower plate 1112, and it is necessary to seal between the mounting plate 1111 and the side surface portion 1120 to prevent the inflow of water. Thus, it is preferable that the sealing member 1300 is located between the side surface portion 1120 and the mounting plate 1111 to be adhered and sealed.

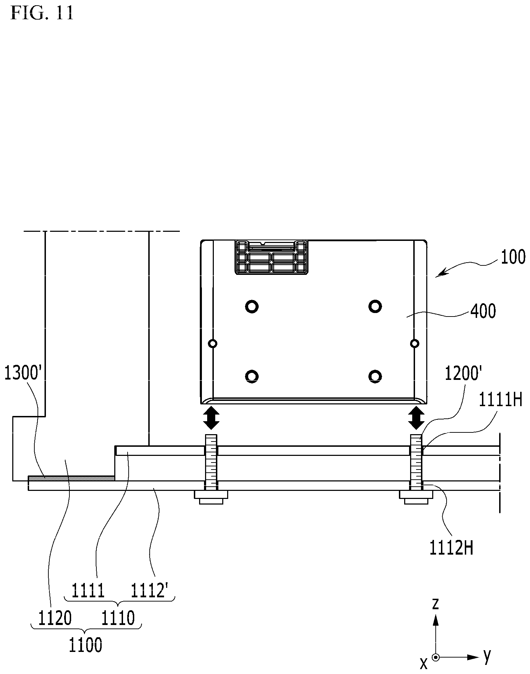

Fig. 11 is a schematic diagram showing a state in which a battery module according to a modified embodiment of the present disclosure is mounted on a pack frame. Parts overlapping with the above-mentioned contents are omitted in order to avoid repetition of the description.

Referring to Fig. 11, the bottom portion 1110 of the pack frame 1100 according to the modified embodiment of the present disclosure may include a mounting plate 1111 for supporting the battery module 100 and a lower plate 1112' located under mounting plate 1111. The pack frame 1100 may further include a side surface portion 1120 located on the side surface of the battery module 100.

At this time, the lower plate 1112' according to the present embodiment can be formed with a lower through hole 1112H rather than an opening, and the lower through hole 1112H of the lower plate 1112' may be located so as to correspond to the through hole 1111H of the mounting plate 1111 with reference to the Z-axis direction. Further, the bolt 1200' according to the present embodiment is formed longer than the bolt 1200 described in Fig. 10, and after sequentially passing through the lower through hole 1112H of the lower plate 1112' and the through hole 1111H of the mounting plate 1111, it can be coupled to the mounting hole 400H of the battery module 100.

At this time, the adhesive sealing member 1300' according to the present embodiment may be located between the side surface portion 1120 and the lower plate 1112'. Since the lower through hole 1112H of the lower plate 1112' is naturally sealed by the insertion of the bolt 1200' according to the present embodiment, a sealing member 1300' for preventing water from entering the pack frame 1100 can be located between the side surface portion 1120 and the lower plate 1112'. That is, the sealing member 1300' according to the present embodiment can play a function of preventing water inflow while being located between the side surface portion 1120 and the lower plate 1112'. Meanwhile, if necessary, a ring-shaped stopper for sealing may be disposed between the head of the bolt 1200' and the lower plate 1112' according to the present embodiment.

The terms representing directions such as the front side, the rear side, the left side, the right side, the upper side, and the lower side have been used in embodiments of the present disclosure, but the terms used are provided simply for convenience of description and may become different according to the position of an object, the position of an observer, or the like.

The one or more battery modules according to embodiments of the present disclosure described above can be mounted together with various control and protection systems such as a battery management system (BMS) and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

### [Description of Reference Numerals]

100: battery module
200: battery cell stack
300: module frame
400: end plate
400M: mounting portion
400H: mounting hole

## Claims

1. A battery pack (1000) with a battery module (100) comprising:
a battery cell stack (200) in which a plurality of battery cells (110) are stacked;
a module frame (300) that houses the battery cell stack (200) and is opened in its one surface; and
end plates (400) that cover the open surfaces of the module frame (300),
wherein the end plates (400) comprise a mounting portion (400M) having a mounting hole (400H) formed therein, and
wherein the mounting hole (400H) is opened at a lower surface of the end plate (400), and a thread is formed on an inside surface of the mounting hole (400H),
a pack frame (1100) that houses the battery module (100); and
a bolt (1200) that passes through a through hole (1111H) formed at the bottom portion of the pack frame (1100) and is coupled to the mounting hole (400H),
**characterized in that**
the bottom portion of the pack frame (1100) comprises a mounting plate (1111) for supporting the battery module (100) and a lower plate (1112) located under the mounting plate (1111), and
the through hole (1111H) is formed in the mounting plate (1111), and the bolt (1200) passes through the through hole (1111H) of the mounting plate (1111) to be coupled to the mounting hole (400H).

2. The battery pack (1000) according to claim 1, wherein:
in the lower plate (1112), an opening (1112P) is formed in a portion corresponding to the through hole (1111H).

3. The battery pack (1000) according to claim 1, wherein:
the pack frame (1100) further comprises a side surface portion (1120) located on the side surface of the battery module (100),
the side surface portion (1120) is in contact with each of the mounting plate (1111) and the lower plate (1112), and
a sealing member (1300) is located between the side surface portion (1120) and the mounting plate (1111).

4. The battery pack (1000) according to claim 1, wherein:
a lower through hole (1112H) is formed in the lower plate (1112), and
the bolt (1200) passes through the lower through hole (1112H) of the lower plate (1112) and the through hole (1111H) of the mounting plate (1111) to be coupled to the mounting hole (400H).

5. The battery pack (1000) according to claim 1, wherein:
a height of the mounting portion (400M) is 0.5 times or less a height of the end plate (400), and
an empty space is provided in the upper portion of the mounting portion (400M) between the end plate (400) and the battery cell stack (200).

6. The battery pack (1000) according to claim 1, wherein:
the end plate (400) comprises a body portion (450), first and second side portions (410, 420), an upper side portion (430) and a lower side portion (440),
the body portion (450) faces the battery cell stack (200), and
the first and second side portions (410, 420), the upper side portion (430), and the lower side portion (440) are respectively extended in a direction perpendicular to one surface of the body portion (450) from both sides, an upper side, and a lower side of the body portion (450).

7. The battery pack (1000) according to claim 6, wherein:
the mounting hole (400H) is opened at a lower surface of the lower side portion of the end plate (400), and
the mounting portion (400M) is extended along a direction parallel to the one surface of the body portion (450).

8. The battery pack (1000) according to claim 1, wherein:
the module frame (300) is opened in its other surface facing the one surface, and
the end plates (400) cover the open surfaces of the module frame (300), respectively.

9. The battery pack (1000) according to claim 1, wherein:
the bolt (1200) is coupled upwardly to the mounting hole (400H).

## Patentansprüche

1. Batteriepack (1000) mit einem Batteriemodul (100), umfassend:
einen Batteriezellenstapel (200), in welchem eine Mehrzahl von Batteriezellen (110) gestapelt ist;
einen Modulrahmen (300), welcher den Batteriezellenstapel (200) aufnimmt und welcher an seiner einen Fläche geöffnet ist; und
Endplatten (400), welche die offenen Flächen des Modulrahmens (300) abdecken,
wobei die Endplatten (400) einen Befestigungsabschnitt (400M) umfassen, welcher ein darin gebildetes Befestigungsloch (400H) aufweist, und
wobei das Befestigungsloch (400H) an einer unteren Fläche der Endplatte (400) geöffnet ist und ein Gewinde an einer Innenfläche des Befestigungslochs (400H) gebildet ist,
einen Packrahmen (1100), welcher das Batteriemodul (100) aufnimmt; und
einen Bolzen (1200), welcher durch ein Durchgangsloch (1111H) verläuft, welches an dem Bodenabschnitt des Packrahmens (1100) gebildet ist, und welcher mit dem Befestigungsloch (400H) gekoppelt ist,
**dadurch gekennzeichnet, dass**
der Bodenabschnitt des Packrahmens (1100) eine Befestigungsplatte (1111) zum Haltern des Batteriemoduls (100) und eine untere Platte (1112) umfasst, welche unter der Befestigungsplatte (1111) angeordnet ist, und
das Durchgangsloch (1111H) in der Befestigungsplatte (1111) gebildet ist, und der Bolzen (1200) durch das Durchgangsloch (1111H) der Befestigungsplatte (1111) verläuft, um mit dem Befestigungsloch (400H) gekoppelt zu sein.

2. Batteriepack (1000) nach Anspruch 1, wobei:
in der unteren Platte (1112), eine Öffnung (1112P) in einem Abschnitt gebildet ist, welcher dem Durchgangsloch (1111H) entspricht.

3. Batteriepack (1000) nach Anspruch 1, wobei:
der Packrahmen (1100) ferner einen Seitenflächenabschnitt (1120) umfasst, welcher an der Seitenfläche des Batteriemoduls (100) angeordnet ist,
der Seitenflächenabschnitt (1120) mit jeder aus der Befestigungsplatte (1111) und der unteren Platte (1112) in Kontakt ist, und
ein Dichtungselement (1300) zwischen dem Seitenflächenabschnitt (1120) und der Befestigungsplatte (1111) angeordnet ist.

4. Batteriepack (1000) nach Anspruch 1, wobei:
ein unteres Durchgangsloch (1112H) in der unteren Platte (1112) gebildet ist, und
der Bolzen (1200) durch das untere Durchgangsloch (1112H) der unteren Platte (1112) und das Durchgangsloch (1111H) der Befestigungsplatte (1111) verläuft, um mit dem Befestigungsloch (400H) gekoppelt zu sein.

5. Batteriepack (1000) nach Anspruch 1, wobei:
eine Höhe des Befestigungsabschnitts (400M) 0,5-mal oder geringer als eine Höhe der Endplatte (400) ist, und
zwischen der Endplatte (400) und dem Batteriezellenstapel (200) ein leerer Raum in dem oberen Abschnitt der Befestigungsplatte (400M) bereitgestellt ist.

6. Batteriepack (1000) nach Anspruch 1, wobei:
die Endplatte (400) einen Körperabschnitt (450), einen ersten und zweiten Seitenabschnitt (410, 420), einen oberen Seitenabschnitt (430) und einen unteren Seitenabschnitt (440) umfasst,
der Körperabschnitt (450) dem Batteriezellenstapel (200) zugewandt ist, und
der erste und zweite Seitenabschnitt (410, 420), der obere Seitenabschnitt (430) und der untere Seitenabschnitt (440) jeweils in einer Richtung erweitert sind, welche von beiden Seiten, einer oberen Seite und einer unteren Seite des Körperabschnitts (450), senkrecht zu einer Fläche des Körperabschnitts (450) ist.

7. Batteriepack (1000) nach Anspruch 6, wobei:
das Befestigungsloch (400H) an einer unteren Fläche des unteren Seitenabschnitts der Endplatte (400) geöffnet ist, und
der Befestigungsabschnitt (400M) entlang einer Richtung erweitert ist, welche parallel zu der einen Fläche des Körperabschnitts (450) ist.

8. Batteriepack (1000) nach Anspruch 1, wobei:
der Modulrahmen (300) an seiner anderen Fläche geöffnet ist, welche der einen Fläche zugewandt ist, und
die Endplatten (400) jeweils die offenen Flächen des Modulrahmens (300) abdecken.

9. Batteriepack (1000) nach Anspruch 1, wobei:
der Bolzen (1200) nach oben mit dem Befestigungsloch (400H) gekoppelt ist.

## Revendications

1. Bloc-batterie (1000) avec un module de batterie (100) comprenant :
un empilement d'éléments de batterie (200) dans lequel une pluralité d'éléments de batterie (110) sont empilés ;
un cadre de module (300) qui abrite l'empilement d'éléments de batterie (200) et est ouvert au niveau d'une de ses surfaces ; et
des plaques d'extrémité (400) qui couvrent les surfaces ouvertes du cadre de module (300),
dans lequel les plaques d'extrémité (400) comprennent une partie de montage (400M) ayant un trou de montage (400H) formé dans celle-ci, et
dans lequel le trou de montage (400H) est ouvert au niveau d'une surface inférieure de la plaque d'extrémité (400), et un filet est formé sur une surface intérieure du trou de montage (400H),
un cadre de bloc (1100) qui abrite le module de batterie (100) ; et
un boulon (1200) qui passe à travers un trou débouchant (1111H) formé au niveau de la partie de dessous du cadre de bloc (1100) et est accouplé au trou de montage (400H),
**caractérisé en ce que**
la partie de dessous du cadre de bloc (1100) comprend une plaque de montage (1111) pour supporter le module de batterie (100) et une plaque inférieure (1112) située sous la plaque de montage (1111), et
le trou débouchant (1111H) est formé dans la plaque de montage (1111), et le boulon (1200) passe à travers le trou débouchant (1111H) de la plaque de montage (1111) pour être accouplé au trou de montage (400H).

2. Bloc-batterie (1000) selon la revendication 1, dans lequel :
dans la plaque inférieure (1112), une ouverture (1112P) est formée dans une partie correspondant au trou débouchant (1111H).

3. Bloc-batterie (1000) selon la revendication 1, dans lequel :
le cadre de bloc (1100) comprend en outre une partie de surface latérale (1120) située sur la surface latérale du module de batterie (100),
la partie de surface latérale (1120) est en contact avec chacune de la plaque de montage (1111) et de la plaque inférieure (1112), et
un élément d'étanchéité (1300) est situé entre la partie de surface latérale (1120) et la plaque de montage (1111).

4. Bloc-batterie (1000) selon la revendication 1, dans lequel :
un trou débouchant inférieur (1112H) est formé dans la plaque inférieure (1112), et
le boulon (1200) passe à travers le trou débouchant inférieur (1112H) de la plaque inférieure (1112) et le trou débouchant (1111H) de la plaque de montage (1111) pour être accouplé au trou de montage (400H).

5. Bloc-batterie (1000) selon la revendication 1, dans lequel :
une hauteur de la partie de montage (400M) est égale à 0,5 fois ou moins une hauteur de la plaque d'extrémité (400), et
un espace vide est fourni dans la partie supérieure de la partie de montage (400M) entre la plaque d'extrémité (400) et l'empilement d'éléments de batterie (200).

6. Bloc-batterie (1000) selon la revendication 1, dans lequel :
la plaque d'extrémité (400) comprend une partie corps (450), des première et seconde parties latérales (410, 420), une partie latérale supérieure (430) et une partie latérale inférieure (440),
la partie corps (450) fait face à l'empilement d'éléments de batterie (200), et
les première et seconde parties latérales (410, 420), la partie latérale supérieure (430), et la partie latérale inférieure (440) sont étendues respectivement dans une direction perpendiculaire à une surface de la partie corps (450) à partir de deux côtés, un côté supérieur, et un côté inférieur de la partie corps (450).

7. Bloc-batterie (1000) selon la revendication 6, dans lequel :
le trou de montage (400H) est ouvert au niveau d'une surface inférieure de la partie latérale inférieure de la plaque d'extrémité (400), et
la partie de montage (400M) est étendue le long d'une direction parallèle à l'une surface de la partie corps (450).

8. Bloc-batterie (1000) selon la revendication 1, dans lequel :
le cadre de module (300) est ouvert au niveau de son autre surface faisant face à l'une surface, et
les plaques d'extrémité (400) couvrent les surfaces ouvertes du cadre de module (300), respectivement.

9. Bloc-batterie (1000) selon la revendication 1, dans lequel :
le boulon (1200) est accouplé vers le haut au trou de montage (400H).
